# EUROPEAN PATENT APPLICATION

(11) **EP 4 530 453 A1**
(43) Date of publication of application: **02.04.2025**
(21) Application number: 23199683.6
(22) Date of filing: 26.09.2023
(51) Int. Cl.: F02B 77/11, B60R 13/08

(54) **A FACETED PANEL; A PROTECTIVE, HOLLOW HOUSING INCLUDING THE PANEL; AND RELATED METHODS**

(71) Applicant: CNH Industrial Belgium N.V., 8210 Zedelgem (BE)
(72) Inventor: DEFOSSEZ, Koen, 8210 Zedelgem (BE); DEMONIE, Lode, 8210 Zedelgem (BE)
(74) Representative: CNH Industrial IP Department

(57) **Abstract**

The disclosure relates to a faceted panel (10a; 10b) for defining part of a hollow, protective housing (30) for use in or on a heat-generating engine or sub-system. The panel (10a; 10b) comprises at least one parting line (11a; 11b) defining an elongate, uninterrupted gap extending between two adjacent parts (14a, 14a') of a said panel (10a; 10b); and a connecting tab (16a, 16b, 16c, 16d) that is connected by respective connecting portions (19, 19') to each of the parts (14a, 14a') beyond the end of the gap, the connecting portions (19, 19') being frangible whereby to permit selective, non-reversible separation of the parts (14a, 14a') from one another along the parting line (11a; 11b).

The panel (10a; 10b) facilitates the design, storage, transportation and installation of parts of a thermally shielding housing for use in e.g. an engine of a vehicle.

## Description

The invention relates primarily to a faceted panel that may be employed to define a protective, hollow housing intended for use in an automotive or agricultural machine environment. The invention also relates to a housing including such a panel; a method of fitting such a housing; and a method of manufacturing a panel.

Conventional powered vehicles and machines such as land vehicles and watercraft rely extensively on the use of internal combustion engines to provide their motive power and power for ancillary systems.

In these engine types an unavoidable by-product of the combustion of a fuel/air mixture in one or more cylinders, and friction in the moving parts, is heat. This must be dissipated in order to avoid damage to the (typically cast and/or machined) metal parts of the engine; and to ensure operational safety and efficiency.

Such heat dissipation may be achieved in a number of ways including causing a cooling fluid such as water to be circulated in channels formed in parts of the engine; and the provision of parts that are intended to be cooled by air surrounding the engine while it is in use.

The air-cooled parts may include e.g. a radiator through which cooling water is passed after it has contacted hot parts of the engine and in which the water is itself cooled; or components such as exhaust manifolds and exhaust pipes that are located near to the cylinder(s) of the engine and that become hot in use through conduction of heat away from the cylinder(s).

Cooling radiators include multi-layered, air-contacting water channel matrices that maximise the dissipation of heat contained in the circulating cooling water; and the designs of parts such as exhaust manifolds also often are optimised from the standpoint of heat dissipation. Furthermore it is known to include cooling fins or vanes that protrude from parts of the engine that become hot in use, whereby the surface area exposed to circulating air is increased compared with the absence of such features.

Regardless of the precise means, or combination of means, employed to effect air cooling in an internal combustion engine (or a heat-generating machine sub-system that for purposes of this disclosure is equivalent to such an engine) it is axiomatic that air-cooled parts such as those described above must be exposed to air in the vicinity of the engine.

In the absence of appropriate shielding however the air-cooled parts also are exposed to contact by external objects and media. If such contact occurs it can have severe adverse consequences as explained below.

In many examples of vehicles and self-powered machines an internal combustion engine may be positioned close to where a human operator sits or stands in order to operate the vehicle or machine in question. Such vehicles and machines include various watercraft in which engines such as outboard motors are mounted with numerous parts exposed adjacent where a user may sit to pilot or otherwise work in the vessel. Similar exposure situations arise in land vehicles and machines such as grass care vehicles, rotovators, brush cutters, rice and other small harvesting machines and chainsaws; and also in larger land-based machines as described herein.

Clearly in the absence of appropriate heat shielding there is a risk of injury which may be serious, or perhaps even fatal, if a human operator contacts a hot part of an engine in such a vehicle.

Air-cooled engine or sub-system parts also present a risk in relation to substances that may contact them when they are hot. This is a particularly acute problem in agricultural vehicles such as tractors, harvesting machines including combine harvesters, baling machines (in which sub-systems such as clutches and flywheel brakes generate heat) and grass care machinery.

Such vehicles often are used in dry conditions in which dust may be generated simply through movement of the machine over dry ground. The dust when it accumulates may reduce the efficiency of cooling features of the vehicle; and may itself be ignitable. Moreover many types of agricultural vehicle generate waste media such as plant dust, chaff, tailings, straw and leaves. This is a consequence of their working operations, which frequently involve mechanical treatment (such as but not limited to cutting) of plants or plant parts in a field.

The waste substances that agricultural vehicles generate often are ignitable or flammable, and typically they also are pervasive because they consist of fine, light particles. Despite measures intended to capture them that often are included in agricultural machines therefore these can readily be blown into and/or can accumulate in recesses and spaces that are features of vehicles and in particular their engines, fins, vanes and cooling radiators. For obvious safety-related reasons it is however strongly undesirable for flammable media such as those listed to contact such engine parts.

Consequently it is known to shield the hot parts of various vehicle engines in order to prevent contact by objects and people; and to minimise the extent to which media such as those explained above can spread to and accumulate near the operationally hot parts and give rise to a fire risk.

A typical heat shield for an engine may be a faceted, hollow housing in which a plurality of panels define a box-like structure that is intended to surround and largely isolate from external contact an air-cooled or otherwise operationally hot part of an engine. "Faceted" as used herein is a reference to the presence of multiple faces of a structure or panel.

The housing in many instances is made from a metal that confers rigidity on the housing design. This means it provides effective shielding; but the use of hollow metal shielding housings is associated with design limitations that create difficulties at the manufacturing and installation stages and also when such housings are supplied as after-market spare parts.

This is in part because in many engines an air-cooled or otherwise operationally hot part may be of an irregular shape. Examples in this regard include the volute housing of an engine turbocharger; and many designs of exhaust manifolds.

It is hard to surround such components with a truly cuboidal housing without causing significant wastage of space, in turn because a cuboidal housing shape does not faithfully follow the shape of the shielded component. It is known to address this problem by providing at least some mutually contiguous panels of an engine heat shield that do not intersect one another at right angles and thereby define faceted housings; and/or for the panels themselves to be faceted such that they do not present a single plane when installed. Consequently the known housings are not truly cuboidal or, in some cases, even recognisably cuboidal at all.

Design features such as those described above help the housings to conform to the shapes of the parts they are intended to shield and thereby minimise the space occupied by the shielding; but they can make the manufacture, storage and transportation of the housings inefficient. This can be e.g. because the housings as a result of their shapes cannot readily or efficiently be stacked or handled in a factory or readily transported when they are supplied as spare parts. Moreover the housing shapes sometimes are complex and therefore expensive to manufacture.

Additionally it is commonplace for the housings to include apertures e.g. to accommodate protruding parts of the components they shield. Such apertures may need to be somewhat large, and forming these in housings that are intended to be self-sustaining, box-like structures may not be straightforward.

A further, significant problem associated with providing the housings is that there may be very limited space for installing them in the engine environment. In particular it may be necessary to install a housing largely surrounding an operationally hot part of an engine that may itself lie closely adjacent another engine part. As a non-limiting example in this regard one may consider e.g. a turbocharger housing that lies closely adjacent a compressor housing. It may be impossible to cause an essentially cuboidal housing to surround such a part in an effective manner.

Even if this is not the case, the need for precision in the positioning of the panels that form a housing highlights a further drawback in the prior art. This is that it often is necessary to include multiple bends or folding lines between the panels. When as in the prior art the panels are made individually, manufacturing tolerances lead to inaccuracies in the alignment of the bends and folds during assembly of a vehicle etc. in which the housing is installed. Sometimes the only way to solve this problem is, on installing them, to leave gaps between the panel parts defining the housings. The gaps are undesirable because they can allow ingress of flammable media as explained.

In light of the foregoing considerations there is a clear need for thermal shielding, for use in or on heat-generating engines, that provides improvements on the prior art.

According to the invention in a first aspect there is provided a faceted panel for defining part of a hollow, protective housing for use in or on a heat-generating engine, the panel comprising at least one parting line defining an elongate, uninterrupted gap extending between two adjacent parts of a said panel; and a connecting tab that is connected by respective connecting portions to each of the parts beyond the end of the gap, the connecting portions being frangible whereby to permit selective, non-reversible separation of the parts from one another along the parting line.

Such a panel permits the construction of a housing that provides numerous advantages over the prior art described above.

Among these is the ability to manufacture the panel with sufficient regularity of its shape as to permit its ready handling, stacking and transportation; yet that on installation in an engine may be adjusted as to its shape and size by fracturing the frangible connection portion.

This in turn allows the panel to be manipulated so that it conforms better to the shape of an operationally hot part that is to be shielded and/or so that its panels may be manoeuvred into place in an engine even when the space for doing so is limited.

Furthermore the ability to adjust the relative positions of two or more parts of such a panel means that any apertures may be formed in the panel more reliably than in the prior art. On installation of the panel to define a housing however the ability to separate and adjust the positions of adjacent panel parts following fracturing of one or more connecting portions means that the apertures may at that time be adjusted to fit the protruding parts that need to be accommodated. At the installation stage further measures, such as the provision of fastenings as described below, may be employed to fix the panels in their adjusted positions.

The inclusion of a tab and a pair of connecting portions connecting the tab to each of two adjacent parts of the housing causes the connection between two adjacent parts to occur beyond, i.e. externally of, the parting line. The presence of a tab makes it easy to separate the parts extending on either side of the parting line since the tab readily may be located by a user, gripped and broken off when fitting the panel to define a thermally shielding housing.

Following breaking of the connecting portions the tab(s) may be discarded or recycled.

A further advantage of the invention is that the connection together, by way of the tabs, of the parts of the panels means that it is no longer necessary to manufacture the panel parts individually; and instead it is possible to include multiple folds and bends in a single pressing step in one and the same component of a housing. The folds and bends in such a component when it is manufactured extend from one panel part to another without interruption. This ensures that the folds, bends, etc., are properly aligned with one another at the manufacturing stage.

This characteristic reduces assembly time when installing the housing parts in a vehicle since there is a high likelihood of the folds and bends being properly aligned from the outset; or of only minor adjustments being required. Making multiple parts of the housing in a single forming operation also reduces manufacturing time and inventory costs because the number of individual parts required is reduced.

As referred to herein the concept of the connecting portion being frangible preferably means that it can be fractured using manual pressure. The material and dimensions of the connecting portion may be selected accordingly.

However within the scope of the invention the material and dimensions of the connecting portion may in the alternative cause it to be capable of fracturing using a tool such as a saw, a scissor-action cutter, a punch, a pair of pliers or a powered tool such as a rotary cutter or grinder.

Such variants may confer storage, handling and transportation advantages as would occur to the person of skill in the art.

A preferred material from which the panels may be made is a stainless steel. Various grades of stainless steel are known that are suitable for forming the panels including the frangible connecting portions. One form of stainless steel that is suitable is an austenitic material such as but not limited to steel grade 304. It is believed that this non-magnetic material is effective in not attracting and holding dust. This is helpful for fire prevention. However a wide variety of other materials also are possible, such as various other metals, including further steel, and especially stainless steel, grades; certain composite materials; and heat-resistant polymers.

In preferred embodiments of the invention the parting line is straight over at least a major part of its length; but this is not a mandatory requirement and non-straight parting lines are entirely possible.

The invention also is considered to reside in a faceted panel for defining part of a protective, hollow housing for use in or on a heat-generating engine, the panel comprising at least one parting line including an elongate, discontinuous gap extending between two adjacent parts of a said panel; and at least one connecting portion interconnecting the said adjacent parts across the gap, the connecting portion being frangible whereby to permit selective, non-reversible separation of the parts from one another along the parting line.

Preferably the panel includes at least one said parting line having two or more said connecting portions interconnecting two adjacent parts of the panel and each being frangible whereby to permit selective, non-reversible separation of the parts from one another along the parting line.

The provision of plural connecting portions may help to confer rigidity on the panel in the vicinity of any parting line. The plural connecting portions may be as described above. When plural connecting portions are provided they need not be all of the same size, shape, material or performance parameters. It is however likely that this would be the case since in many embodiments of the invention all the parts of the housing would be integrally formed from the same material.

Combinations of the two primary types of embodiment, as defined above, may be provided in one and the same panel or in one and the same housing. In other words it is possible in a single example of the invention to provide both a parting line that includes one or more of the connecting portions along its length; and a parting line the panel parts of which are connected by the tab and connecting portions combination in which the connecting portions lie beyond an end of the parting line.

Indeed both the aforesaid types may be provided in a single parting line, which as a result would include connecting portions and a tab beyond an end; and one or more connecting portions at locations along its length.

More generally, preferences and options for a given aspect, feature or parameter of the invention should, unless the context indicates otherwise, be regarded as having been disclosed in combination with any and all preferences and options for all other aspects, features and parameters of the invention.

Preferably at least one said connecting portion is made from the same material as at least one said part to which it is connected. Such features assist the manufacture of the panel as e.g. a stamped or pressed metal construction as may be preferred in certain manufacturing environments.

In a preferred embodiment at least one said parting line terminates in respective diverging edges of the parts of the panel that lie adjacent the parting line, the diverging edges defining an opening between the parts that is wider than the gap of the parting line.

Such features permit the inclusion of one or more apertures in the panel. Such apertures may, on breaking of one or more connecting portions as described, be adjusted to an operational size and/or manoeuvred to fit around an engine component (through separation and position adjustment of the panel parts formerly connected along the parting line).

Conveniently two of the panel parts that are adjacent one another and separated by a parting line as described may be formed of or from a metal; and the elongate gap of the parting line may be formed by laser cutting of the metal.

The use of a laser cutter to form the parting line is particularly preferable since it allows forming of the parting line with very high accuracy; and moreover through appropriate programming of a laser cutting machine it is possible to create any desired parting lines with the connecting portion(s) formed integrally with the remainder of the material of the panel. This in turn can be achieved by causing the cutting action of the laser cutter to be interrupted, as it travels along the path of each of the parting lines, in order to define each desired connecting portion.

In preferred embodiments the width of at least one of the elongate gaps is around 0.2 mm. Further preferably the length of a said connecting portion along the gap in which it is formed, subject to tolerancing variations that will be known to the person of skill in the art, is 1 mm.

Such aspects readily may result from use of a laser cutter to form the parting line(s) and connecting portion(s).

As will be apparent from the preferred use of a laser cutter to form the gap(s) and connecting portion(s), in embodiments the gap defining each parting line preferably is constant along the length of the parting line, in order to close the volume shielded by the housing as much as possible.

Preferably the panel includes at least one fold or bend delineating respective facets and that crosses a said parting line so as to extend on or in at least two parts of the panel. This aspect advantageously helps to address the problem of fitting inaccuracy that derives from the existence of folds or bends in the material of one or more panel, as explained above.

According to another aspect of the invention there is provided a housing comprising at least one faceted panel as specified herein and defining a side of the housing. In preferred embodiments the housing comprises two or more said panels made of the same material.

Such features assist in the economic production of housings and of panels for forming them. However it is equally possible for disparate materials (such as but not limited to different thicknesses, grades and/or densities of the material from which the panels are formed, or entirely different materials) to be employed in respective panels forming a housing, in order to achieve particular benefits such as but not limited to a greater shielding effect in certain locations. As indicated it is also at least theoretically possible for an individual panel as disclosed herein to be formed from more than one material.

The panels of the housing may be mutually contiguous or connected or may be separate from one another. They may be skewed relative to one another.

In another aspect the invention relates to a faceted, protective, hollow housing, for use in or on a heat-generating engine, comprising a plurality of panels defining sides of the housing; at least one parting line including an elongate gap formed between two said adjacent parts; and at least one formerly connecting portion extending part-way between the said adjacent parts or between a tab and at least one of the said parts, the formerly connecting portion being fractured whereby to permit adjustment of the positions of the parts relative to the parting line.

In other words the invention extends to the housing as defined herein following fracturing of one or more connecting portion such as to permit adjustment of the positions of parts of the housing panels relative to one another. The housing in this condition may exist independently or may be installed in a shielding position in or on a vehicle or machine engine.

In the latter case preferably at least two said adjacent parts of one or more panels of the housing are fixed to one or more further component whereby relative movement between the parts in question is prevented. Further preferably one or more fastenings may be provided for fastening the at least two adjacent parts to one or more further component.

These aspects permit e.g. the bolting or welding of parts of the panels of the housing to components of or locations on an engine, following (a) breaking of one or more of the tabs to separate the panel parts from one another; and (b) adjustment of the positions of the panel parts so that they correctly surround and shield a desired location on the engine.

The fastenings may take any of a range of forms, including but not limited to bolts, screws, studs, rivets, welds, clips and harpoon connectors. Combinations of different types of fastening may be provided.

The invention is considered to reside in a method of fitting a housing including the steps of breaking at least one said connecting portion connecting the tab to one or more said parts; positioning the parts, including adjustment of their mutual separation along a said parting line, so as to shield at least one further component; and fastening the parts when so positioned.

Such a method, which is suitable for embodiments in which the housing includes a connecting tab that is connected by respective connecting portions to each of the parts of a panel beyond the end of the gap defined by a parting line as specified, may be carried out for example during the manufacture of the machine or vehicle in which a thermal shielding effect is required; or as an after-market activity, for instance as a machine upgrade; or in the event of an originally-fitted housing degrading or becoming damaged.

The invention further extends to a method of fitting a housing as defined herein, the method including the steps of breaking at least one said connecting portion connecting one or more said parts of at least one panel of the housing; positioning the parts, including adjustment of their mutual separation along a said parting line as defined, so as to shield at least one further component; and fastening the parts when so positioned.

This is a variant of the method defined above that is adapted for embodiments from which the tab is absent; and instead connecting portions are provided part-way along one or more of the parting lines.

In some embodiments of the invention combinations of the methods defined above are appropriate, for example in embodiments in which the connecting tabs and associated connecting portions are provided beyond the ends of the parting lines in combination with connecting portions part-way along one or more of the parting lines.

The invention further resides in a method of manufacturing a housing as defined herein, including the steps of defining, in one or more panel, one or more uninterrupted, elongate parting line and one or more discontinuous tab separation line, at least one said tab separation line including at least two frangible connecting portions respectively interconnecting the tab and two adjacent parts of the panel that exist on opposite sides of the parting line.

Additionally or alternatively the manufacturing method may include the steps of defining, in one or more panel, one or more discontinuous, elongate parting line including at least one frangible connecting portion interconnecting two adjacent parts of the panel that exist on opposite sides of the parting line.

Combinations of such manufacturing methods as defined above are possible, in order to create a hybrid housing having both parting lines that are interrupted by connecting portions and one or more tabs connected by connecting portions so as to extend across the ends of one or more of the parting lines.

Optionally either version of the method may include using a laser cutter to create at least one said tab separation line.

There now follows a description of preferred embodiments of the invention, by way of non-limiting example, with reference being made to the accompanying drawings in which:
Figure 1 is a perspective view of a first embodiment of the invention in an as-manufactured state, including a number of tabs connected to the panel by way of connecting portions;
Figure 2 is an enlargement of part of the Figure 1 panel showing a tab and associated connecting portions in detail;
Figure 3 is a perspective view of a panel that is similar to the Figure 1 panel, following breaking away of the tabs through fracturing of the connecting portions;
Figure 4 is a perspective view of a housing including a pair of panels that each are similar to the panel of Figure 3 and illustrating one example of how the panels may be positioned to form the housing; and
Figure 5 is a perspective view, taken from the opposite side to e.g. Figures 1 and 3, of a faceted panel according to a second embodiment of the invention, showing the panel in an as-manufactured state.

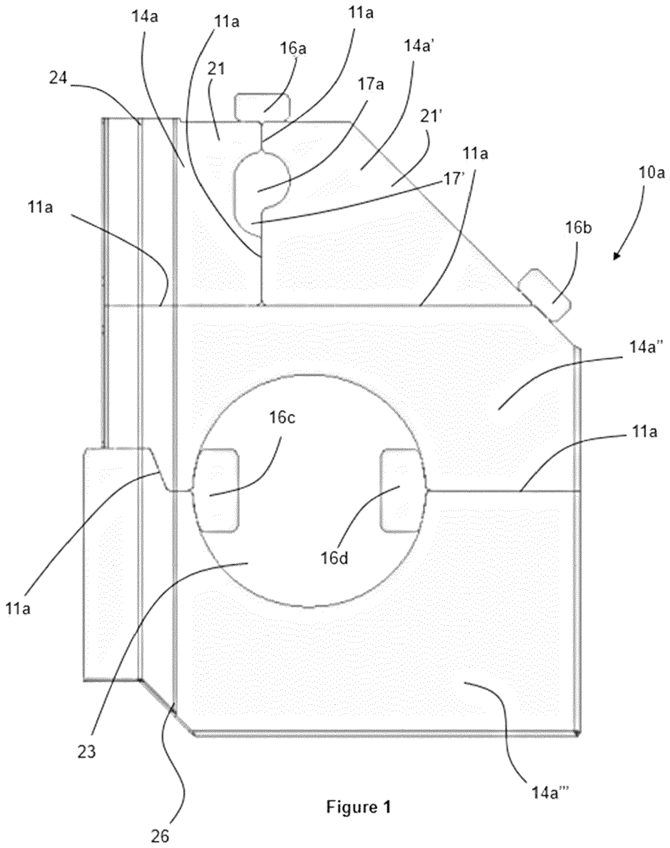

Figure 1 shows in perspective view an embodiment of a faceted panel 10a, according to the invention, for defining part of a hollow, protective housing for use in or on a heat-generating engine or sub-system, and especially an internal combustion engine. No particular significance attaches to the type and use of the source of heat requiring shielding; although the illustrated embodiment is of particular utility in relation to the diesel engine of an agricultural vehicle such as a combine harvester, another harvesting vehicle, a tractor, a crop sprayer or a grass care machine.

The panel 10a as shown is unitary and comprises a plurality of parting lines 11a. The panel is formed by pressing or stamping a sheet of a suitable material that preferably is a stainless steel grade such as that defined herein. The sheet is of a thickness that confers rigidity on the panel when it is formed. The person of skill in the art will be able to determine the precise choice of thickness that is suitable for a given use situation.

The parting lines 11a define elongate, straight-sided gaps that separate respective parts 14a, 14a', 14a" and 14a‴ defining the panel 10a.

The gaps of the parting lines 11a are in the Figure 1 embodiment continuous and uninterrupted along their elongate lengths, and are of constant width along their lengths. The unitary nature of the panel 10a in the form as shown in Figure 1 is the result of the inclusion of tabs 16a and connecting portions 19, 19' that lie externally of the parting lines 11a, beyond their ends, as described below.

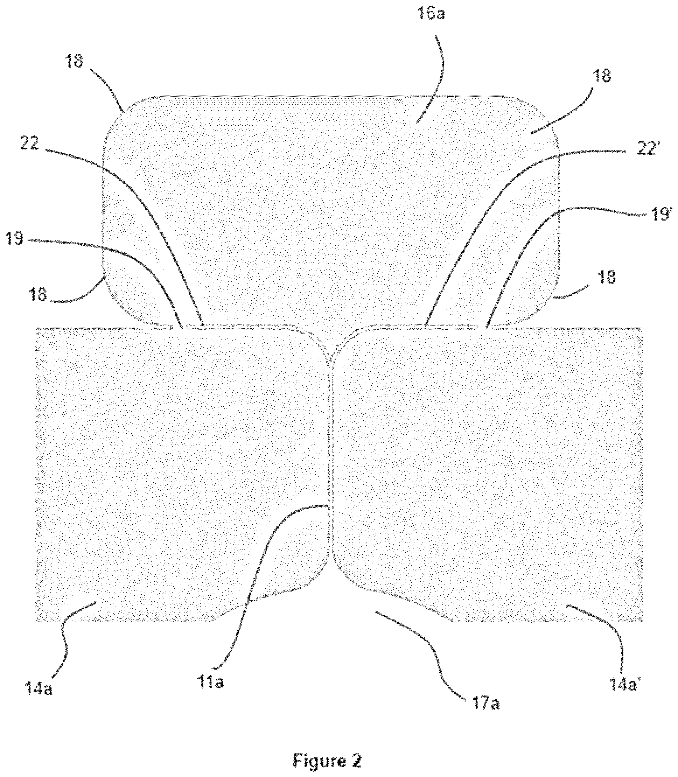

An exemplary tab and associated connecting portions is shown in Figure 2, which illustrates in enlarged detail one such tab 16a located adjacent the in-use upper part of a part-circular opening 17a described in more detail below.

The tab 16a as best shown in Figure 2 is an essentially rectangular tab that is dimensioned so as to be easily gripped by hand. The four corners include optional rounded sections 18. These make it relatively easy for a laser cutter to form the tab 16a from a sheet of material; and also reduce the risk of injury to users when the tab is gripped.

The tab attaches by way of respective, protruding connecting portions 19, 19', defining joints (that are referred to herein as "micro-joints") to each of two respective parts 14a, 14a' of two parts of panel 10a. The tab 16a and the connecting portions 19, 19' are formed from the same material, which also is the material of the parts 14a, 14a' (i.e. stainless steel in the preferred embodiment).

Between the tab 16a and each of the panel parts 14a, 14a' there extends a respective tab parting line 22, 22' that over the major part of its length extends parallel to the adjacent, long edge of the tab 16a. As is apparent from Figure 2 therefore when the micro-joints 19, 19' are ruptured as described herein the tab 16a separates from the panel parts 14a, 14a' along the tab parting lines 22, 22'.

The tab parting lines 22, 22' extend from the connecting portions 19, 19' towards one of the parting lines 11a that extends essentially at right angles to the tab parting lines 22, 22'. In the vicinity of this parting line 11a the tab parting lines 22, 22' curve smoothly to blend into the parting line 11a as illustrated. The smooth blending of the tab parting lines 22, 22' into the parting line 11a also is a consequence of using a laser cutter to form the various parting lines. This feature may be optional if a cutting means other than a laser cutter is used to form the parting lines 22, 22', 11a.

At its end that in Figure 2 is its lowermost point the gap defined by the illustrated section of the parting line 11a widens to the left and the right as illustrated to provide diverging edges of the panel parts 14a, 14a'. These define part of the circumference of the part-circular opening 17a that is also visible in Figure 1. As is apparent from Figures 1 and 2 the opening 17a is considerably wider than the gap of the parting line 11a and is a part-circular shape including a non-circular aperture extension 17' that extends downwardly when the panel 10a is in its upright, in-use orientation as illustrated. In the illustrated embodiment the aperture shape is chosen to include smooth transitions from one part of the aperture to another, and to avoid sharp corners. Although these features are for obvious reasons desirable it is not essential that they are included, or that they adopt the forms shown.

As is well-known, laser cutters can cut metals with a high degree of precision. An advantage of using a laser cutter as the preferred means of forming the parting lines is that the gaps defined by the parting lines may be kept as narrow as possible, thereby minimising the amount of material that needs to be removed during forming of the parting lines. This in turn minimises the energy required to cut the parting lines, reduces material wastage and confers on the connecting portions a desired stiffness that is appropriate for their retaining function and rupturing characteristics.

In particular the preferred but non-limiting length of the connecting portions 19, 19' is 1 mm (subject to tolerancing variations as mentioned). An exemplary, non-limiting width of the parting line is approximately 0.2 mm.

The tab 16a shown in Figure 2 extends horizontally when the panel is supported in an upright position. As is apparent from Figure 1 however this need not be the case, and numerous alternative tab orientations are possible. Figure 1 shows as non-limiting examples tab 16b that is, as a result of orientation of the edges of the panel part adjacent which it is formed, inclined at approximately 45° to a horizontally extending parting line 11a; and tabs 16c and 16d that extend essentially as tangents to edges of a further, circular aperture 23.

The edges of tabs 16c and 16d that lie closest to the edges of the aperture 23 are formed as arcs so as to conform to the circular aperture shape. Aside from this detail the designs of the tabs 16a, 16b, 16c and 16d and associated connecting portions are all essentially the same in the illustrated embodiment. However this need not be the case; and various tab designs may be adopted in one and the same panel if desired. It will be apparent to the person of skill in the art how to vary the design of aspects of the panel within the scope of the invention.

Figure 1 illustrates one of the highly advantageous features of the panel of the invention, this being the forming of folds and bends in the material of the panel that extend cross the parting lines 11a.

In Figure 1 a pair of fold lines 24, 26 extend longitudinally from the in-use top edge of the panel to the in-use bottom edge. Further optional folds may extend e.g. part-way along the panel between the top and bottom edges and with the folds 24, 26 define multiple facets of the panel.

As is apparent from Figure 1 at least some of the parting lines 11a cross the fold lines 24, 26. This means that on removal of the tabs 16b and 16c in the illustrated example respective panel parts will be separated from one another along these parting lines in such a way that the folds continue from one panel part into the next. The ability to form the folds in a single pressing or stamping step notwithstanding that in-use distinct panel parts result when the panel is installed is a significant advantage of the invention.

Overall in the example of Figures 1 and 2 the presence of two in-use horizontal parting lines 11a, one vertical parting line 11a, the aperture 17a through which the vertical parting line 11a extends, the aperture 23 through which one of the horizontal parting lines 11a extends and four tabs 16a, 16b, 16c and 16d gives rise to the ability to form four distinct panel parts 14a, 14a', 14a" and 14a‴ on removal of the tabs. However as will readily be apparent to the person of skill in the art the arrangement, number, lengths and orientations of the parting lines 11a, the shapes, sizes and locations of any apertures, the number, shapes, lengths and orientations of any folds, the overall dimensions of the panel (including its length, width and thickness) and the shapes, sizes, numbers and locations of the tabs 16 may be varied widely within the scope of the invention.

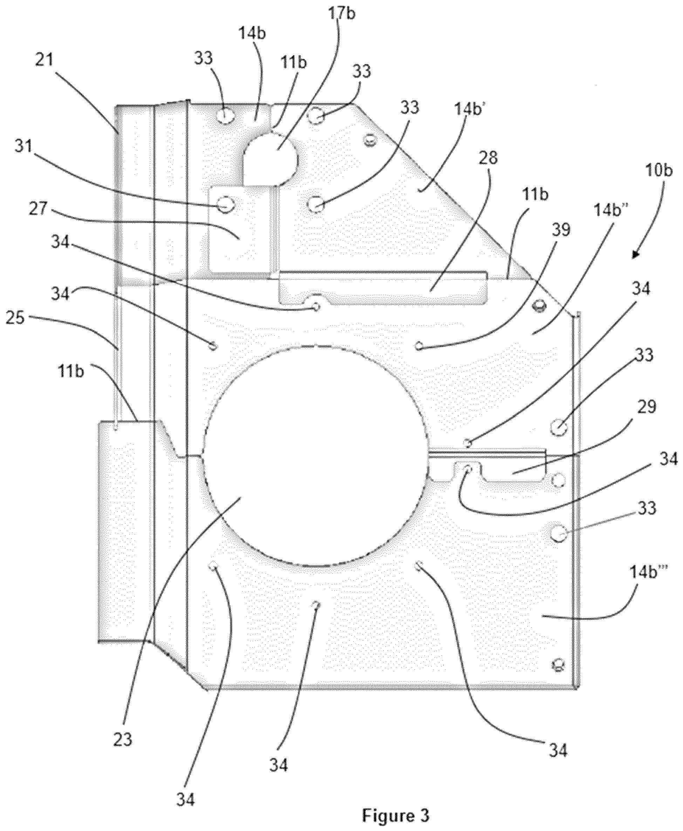

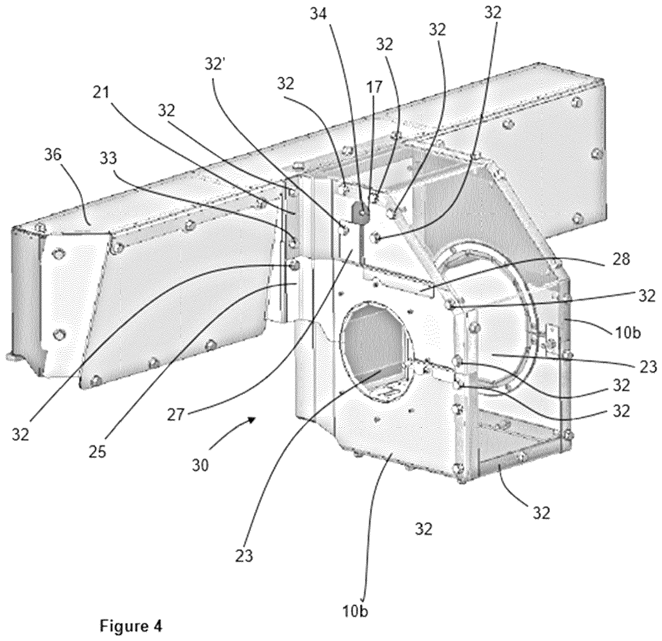

Figure 3 shows a panel 10b, that is similar to panel 10a of Figures 1 and 2, after fracturing of the micro-joints connecting the tabs across parting lines 11b (that are similar to parting lines 11a but differ in certain details) and removal of the tabs. Panel 10b however differs from panel 10a in that two of the panel parts 14b', 14b" include elongate securing tabs 27, 28, 29 for fixing the panel parts in position defining a panel of a thermally shielding housing 30 illustrated in Figure 4. Furthermore a number of apertures are formed in the panel in order to assist in securing it in place when the housing 30 is constructed; and as explained below the aperture 17b differs slightly from the counterpart aperture 17a in the Figure 1 panel.

As is visible in Figure 3 the securing tab 27 extends in an in-use vertical direction part-way along the vertical edge of panel part 14b' and includes a fixing aperture 31. Securing tab 27 overlaps the edge of adjacent panel part 14b, in which is formed a similar fixing aperture that aligns with aperture 31 on assembly of the housing 30. As best shown in Figure 4 a securing screw 32 may be inserted through the aperture 31 when it is aligned with the aperture formed in panel part 14b to secure the two panel parts in position.

Three further fixing apertures 33 formed in panels 14b and 14b' define with aperture 31 a square aperture pattern.

Securing tab 27 truncates aperture 17b so that it is of a different shape from aperture 17a visible in Figure 1.

Securing tab 28 extends along the in-use lowermost edge of panel part 14b' and on assembly of the housing 30 overlies part of one edge of panel part 14b" as illustrated in Figures 3 and 4. This assists to locate panel part 14b' and panel part 14b" relative to one another.

Securing tab 29 extends in a similar manner to tab 28 along the in-use lowermost edge of panel part 14b" and overlies part of the uppermost edge of panel part 14b‴, again in order to perform a locating function on assembly of the housing 30.

Additional securing tabs 21, 25 protrude at angles respectively to panel part 14b and panel part 14b' and are perforated in order to receive further securing screws 32 (Figure 4).

As is further illustrated in Figures 3 and 4 an array of apertures 33 is formed at various locations in the panel parts 14b, 14b', 14b" and 14b‴ for receiving screws 32 that secure the panel parts to further components of the housing 30. An additional circular array of stud holes 34 is provided surrounding aperture 23 which in Figures 3 and 4 is the same as aperture 23 of Figure 1. The stud holes 34 on assembly of the housing receive locating studs of a turbine housing in the specific example shown.

As will occur to the person of skill in the art the positions, numbers and sizes of any securing apertures also may be varied widely, to suit the precise form of the housing that is constructed using panels such as panel 10a or panel 10b.

The housing 30 is formed by initially providing two of the faceted panels such as panels 10b. As supplied these are in the form exemplified by Figure 1, i.e. including the tabs 16 secured by the micro-joint connecting portions, so a preliminary step in forming of the housing 30 involves breaking away of the tabs 16 in order to transform the panels essentially to the form shown in Figure 3. In this form the panels 10b may be secured to intermediate panel sections, shown in phantom in Figure 4, using the screws 32 with adjustment of the positions of the panels 10b taking place at this time to fit the available space and to cause the housing 30 to conform to any heat-generating parts that require shielding.

In the non-limiting example of Figure 4 the housing 30 is intended to surround a turbocharger. The apertures 23 accommodate the turbocharger housing and are differently sized in the respective panels 10b to take account of the irregular nature of such sub-systems. Aperture 17 accommodates a turbocharger wastegate control rod that exits the housing 30 through a perforated, flexible sheet 34 that is bolted using screws 32 to close off most of the area of the aperture 17 save for a small passage via which the wastegate rod protrudes. Securing of the panel 10b to the sheet 34 in this way helps to rigidify the housing 30.

The securing tabs 21, 25 optionally may be secured to a rigid component such as the additional housing 36 for a turbocharger compressor shown in Figure 4, a vehicle frame or any other part that suitably may be employed as an anchor location for the housing 30. In the illustrated example screws 32 are employed for the various fastening purposes, but these could be replaced by alternative fastenings the locations and numbers of which may be chosen to suit the specific application under consideration.

The panel 10b defining the opposite end of the housing 30 may be secured in a similar manner to the foregoing, and by following a similar sequence of preparation (i.e. tab-breaking), positioning and securing steps.

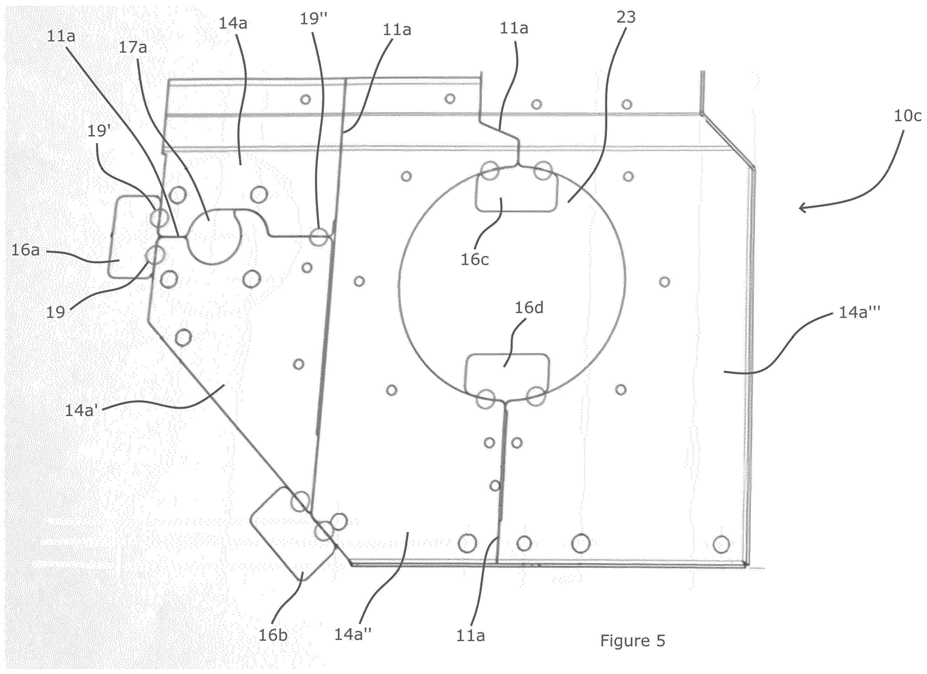

Referring now to Figure 5 there is shown a panel 10c, within the scope of the invention, that is similar to the panel 10a of Figures 1 and 2. In this embodiment however in addition to the tab-defined micro-joints 19, 19' of the panel 10c includes a further micro-joint 19" defined part-way along the parting lines 11a extending through the aperture 17a. The additional micro-joint 19" lies to the right of the aperture 17a when the panel 10c is orientated as illustrated.

Micro-joint 19" connects to opposite sides of the aforesaid parting line 11a and does not rely on the presence of a tab such as the various tabs 16. In other words it bridges across the parting line and may be ruptured by twisting or bending the panel sections 14a, 14a' relative to one another in order to separate the sections 14a and 14a' from one another. Such twisting or bending may be effected manually or using a tool such as one of those listed herein.

Figure 5 in other words shows that the inventive micro-joints disclosed herein may be formed at the ends of the parting lines and/or part-way along them; and when the latter is the case there is no need (or indeed in the majority of cases no possibility) for the tabs 16 to be provided.

Figure 5 identifies the micro-joints by way of inscribing circles as are visible; but these merely schematically represent the approximate locations of the micro-joints and are not themselves features that would be present in the panel 10c when this is studied as a physical item as opposed to a drawing. Figure 5 therefore includes circles illustrating the positions of the micro-joints attaching the tabs 16b, 16c and 16d in addition to those showing the locations of the micro-joints 19, 19' that are described in detail.

Although Figure 5 shows a combination of tab-defined micro-joints 19, 19' and the in-line type of micro-joint 19", it is entirely possible within the scope of the disclosure hereof for a panel such as panel 10c to be formed exclusively with one or other of the two types of micro-joint. Consequently more than the single micro-joint 19" illustrated may be included in one and the same panel 10c and indeed in one and the same parting line such as line 11a.

As explained the housing 30 may adopt any of a wide range of forms, depending on the precise shielding requirement under consideration.

Methods of manufacturing and installing the embodiments described herein also are as described. The supply of panels such as those shown in the drawings may include stacking the panels 10 one inside another, with the fold lines and bends helping to maintain the integrity of such a stack. When stacked the panels 10 may economically be transported in large numbers, if necessary following the application of e.g. tension banding or another packaging medium in order to prevent separation of the stacked panels.

A variant on the embodiments illustrated in the drawings hereof is to provide the panels 10 in the as-manufactured condition secured, by micro-joints such as those described, to a storage/transportation frame made of interconnected bar members. Such a frame may define e.g. an outer perimeter of the panel 10 with micro-joints at intervals connecting the panel 10c to the frame.

Such a frame may render the panel 10 relatively easy to transport and subject to loading, stacking and handling operations. When it is required to install the panel as part of a housing the micro-joints connecting it to the frame may be ruptured (e.g. manually or using a tool) so that the panel is freed from the frame and available for installation.

In such an embodiment the panel may be as illustrated in e.g. Figure 1 or Figure 5, but it may not be essential for this to be the case. On the contrary, the micro-joints connecting the panel to the frame may be adequate to confer structural integrity on the panel during transportation and storage. Following separation of the panel parts from the frame they may be secured in position e.g. using fasteners such as the screws 32 visible in Figure 4, with no need for the tabs 16 or in-line micro-joints 19".

As explained the micro-joints defining the connecting portions exemplified by elements 19, 19' and 19" may be designed so that they may be fractured using manual pressure. Alternatively, as mentioned, these elements may be made such that a tool is required in order to effect fracturing. Examples of suitable tools are as given herein.

Although the invention has been exemplified by reference to a sheet metal housing, the principles described herein may be applied when it is required to manufacture a housing via other means than sheet metal fabrication. Variants in this regard will occur to the person of skill in the art and lie within the scope of this disclosure.

Overall the invention significantly increases the efficiency with which the parts of a thermal shield may be designed, manufactured, transported and installed.

The listing or discussion of an apparently prior-published document in this specification should not necessarily be taken as an acknowledgement that the document is part of the state of the art or is common general knowledge.

## Claims

1. A faceted panel (10a; 10b) for defining part of a hollow, protective housing (30) for use in or on a heat-generating engine or sub-system, the panel (10a; 10b) comprising at least one parting line (11a; 11b) defining an elongate, uninterrupted gap extending between two adjacent parts (14a, 14a', 14a", 14a‴; 14b, 14b', 14b", 14b‴) of a said panel (10a; 10b); and a connecting tab (16a, 16b, 16c, 16d) that is connected by respective connecting portions (19, 19') to each of the parts beyond the end of the gap, the connecting portions (19, 19') being frangible whereby to permit selective, non-reversible separation of the parts (14a, 14a', 14a", 14a‴; 14b, 14b', 14b", 14b‴) from one another along the parting line (11a; 11b).

2. A faceted panel (10c) for defining part of a protective, hollow housing for use in or on a heat-generating engine or sub-system, the panel (10c) comprising at least one parting line (11a) including an elongate, discontinuous gap extending between two adjacent parts (14a, 14a') of a said panel (10c); and at least one connecting portion (19") interconnecting the said adjacent parts across the gap, the connecting portion (19") being frangible whereby to permit selective, non-reversible separation of the parts (14a, 14a') from one another along the parting line (11a).

3. A panel (10c) according to Claim 2 including at least one said parting line (11a) having two or more said connecting portions (19") interconnecting two adjacent parts (14a, 14a') of the panel and each being frangible whereby to permit selective, non-reversible separation of the parts (14a, 14a') from one another along the parting line (11a).

4. A panel (10a; 10b; 10c) according to any preceding claim wherein at least one said connecting portion (19, 19'; 19") is made from the same material as at least one said part (14a, 14a', 14a", 14a‴; 14b, 14b', 14b", 14b‴) to which it is connected.

5. A panel (10a; 10b; 10c) according to any preceding claim including at least one said parting line (11a) that terminates in respective diverging edges of the parts (14a, 14a') of the panel (10a; 10b; 10c) that lie adjacent the parting line (11a), the diverging edges defining an opening between the parts that is wider than the gap of the parting line (11a).

6. A panel (10a; 10b; 10c) according to any preceding claim including two adjacent said parts (14a, 14a', 14a", 14a‴; 14b, 14b', 14b", 14b‴) that are formed of a metal and in which the elongate gap of the parting line (11a; 11b) is formed by laser cutting of the metal.

7. A panel (10a; 10b; 10c) according to any preceding claim in which the length of a said connecting portion (19, 19'; 19") along the gap in which it is formed is 1 mm.

8. A panel (10a; 10b; 10c) according to any preceding claim including at least one fold or bend (24, 26) delineating respective facets and that crosses a said parting line (11a, 11b) so as to extend on or in at least two parts of the panel (10a; 10b; 10c).

9. A housing (30) comprising at least one faceted panel (10a; 10b) according to Claim 1 or any preceding claim depending therefrom, and/or at least one faceted panel (10c) according to Claim 2 or any preceding claim depending therefrom, defining a side of the housing (30).

10. A housing according to Claim 9 including two or more said panels (10a; 10b; 10c) made of the same material.

11. A faceted, protective, hollow housing (30), for use in or on a heat-generating engine or sub-system, comprising a plurality of panels (10b) defining sides of the housing; at least one parting line (11a; 11b) including an elongate gap formed between two adjacent parts (14b, 14b', 14b", 14b‴) of at least one said panel (10b); and at least one formerly connecting portion extending part-way between the said adjacent parts or between a tab and at least one of the said parts, the formerly connecting portion being fractured whereby to permit adjustment of the positions of the parts (14b, 14b', 14b", 14b‴) relative to the parting line (11a; 11b).

12. A housing (30) according to Claim 11 wherein at least two said adjacent parts (14b, 14b', 14b", 14b‴) are fastened to one or more further component whereby relative movement between the parts is prevented.

13. A method of fitting a housing (30) according to Claim 9 or Claim 10 when depending from Claim 1, including the steps of breaking at least one said connecting portion (19, 19') connecting the tab to one or more said parts (14a, 14a', 14a", 14a‴; 14b, 14b', 14b", 14b‴); positioning the parts (14a, 14a', 14a", 14a‴; 14b, 14b', 14b", 14b‴), including adjustment of their mutual separation along a said parting line (11a; 11b), so as to shield at least one further component; and fastening the parts ((14a, 14a', 14a", 14a‴; 14b, 14b', 14b", 14b‴) when so positioned.

14. A method of fitting a housing (30) according to Claim 9 or Claim 10 when depending from Claim 2 or Claim 3, including the steps of breaking at least one said connecting portion (19") connecting one or more said parts (14a, 14a', 14a", 14a‴; 14b, 14b', 14b", 14b‴); positioning the parts (14a, 14a', 14a", 14a‴; 14b, 14b', 14b", 14b‴), including adjustment of their mutual separation along a said parting line (11a; 11b), so as to shield at least one further component; and fastening the parts (14a, 14a', 14a", 14a‴; 14b, 14b', 14b", 14b‴) when so positioned.

15. A method of manufacturing a housing (30) according to Claim 9 when depending from Claim 1, including the steps of defining, in one or more panel (10a; 10b), one or more uninterrupted, elongate parting line (11a; 11b) and one or more discontinuous tab separation line (22, 22'), at least one said tab separation line (22, 22') including at least two frangible connecting portions (19, 19') respectively interconnecting a tab (16a) and two adjacent parts (14a, 14a') of the panel (10a; 10b) that exist on opposite sides of the parting line (11a; 11b).

16. A method of manufacturing a housing (30) according to Claim 9 when depending from Claim 2 or Claim 3, including the steps of defining, in one or more panel (10c), one or more discontinuous, elongate parting line (11a) including at least one frangible connecting portion (19") interconnecting two adjacent parts (14a, 14a') of the panel that exist on opposite sides of the parting line (11a).

17. A method according to Claim 15 or Claim 16 including using a laser cutter to create at least one said parting line (11a; 11b) and/or at least said tab separation line (22, 22').
